# EUROPEAN PATENT APPLICATION

(11) **EP 4 693 543 A1**
(43) Date of publication of application: **11.02.2026**
(21) Application number: 24880166.4
(22) Date of filing: 18.10.2024
(51) Int. Cl.: H01M 10/04, B65H 1/14, B65H 1/18, B65H 1/04, B65H 3/48, B65H 3/08

(54) **ELECTRODE SUPPLY APPARATUS AND METHOD, AND ELECTRODE ASSEMBLY MANUFACTURING APPARATUS AND METHOD**

(30) Priority: 20.10.2023 KR 20230140925
(71) Applicant: LG Energy Solution, Ltd., Seoul 07335 (KR)
(72) Inventor: KIM, Jongcheon, Daejeon 34122 (KR); LEE, Hyung Woon, Daejeon 34122 (KR); HWANG, Hong Ju, Daejeon 34122 (KR)
(74) Representative: Plasseraud IP
(86) International application number: PCT/KR2024/015838
(87) International publication number: WO 2025/084829

(57) **Abstract**

The present invention relates to an electrode supply apparatus and method, and an electrode assembly manufacturing apparatus and method.

## Description

This application claims priority to and the benefit of Korean Patent Application No. 10-2023-0140925 filed with the Korean Intellectual Property Office on October 20, 2023, the entire contents of which are incorporated herein by reference.

### [Technical Field]

The present invention relates to an electrode supply apparatus and method and an electrode assembly manufacturing apparatus and method using the same.

### [Background Art]

Unlike primary batteries, secondary batteries may be rechargeable and have small scales and high capacities. Recently, research and development have been actively conducted on the secondary batteries. As development of technologies and demands for mobile devices have increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be classified into a jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films. In order to manufacture the stack-type electrode assembly or the stack- and-folding-type electrode assembly, a process of supplying sheets of electrodes between separators is performed. In this case, the electrodes are transferred from an electrode magazine part, in which a plurality of electrodes is stacked, onto a stack table or an alignment table so as to be subjected to subsequent process steps. There have been attempts to improve process efficiency and reduce a defect rate during the process of manufacturing an electrode assembly.

### [Document of Related Art]

[Patent Document] Korean Patent Application Laid-Open No. 10-2013-0132230

### [Detailed Description of the Invention]

### [Technical Problem]

The present inventors have found that a shape in which electrodes are stacked in an electrode magazine part is changed, and for example, positions of electrodes picked up in the electrode magazine part are changed because of curled shapes of the electrodes, which may cause a two-sheet defect caused when two or more sheets of electrodes are picked up, a pick-up defect caused by an electrode picking-up part, or a defect caused when the electrodes are erroneously positioned on a stack table or an alignment table configured to transfer the picked-up electrodes. The above-mentioned defect causes deteriorations in process yield and operation rates.

Accordingly, the present invention is intended to provide an electrode supply apparatus and method and an electrode assembly manufacturing apparatus and method using the same, which are capable of measuring displacement amounts of stacked shapes, such as curled shapes of electrodes in an electrode magazine part, and minimizing facility errors and deteriorations in yield and operation rates.

### [Technical Solution]

An embodiment of the present invention provides an electrode supply apparatus including: an electrode magazine part in which a plurality of electrodes is stacked and accommodated; a sensor part configured to detect a stacked shape of the electrode in the electrode magazine part; an electrode picking-up part configured to pick up the electrode in the electrode magazine part; and a position controller configured to change a position of the electrode in the electrode magazine part in accordance with the stacked shape of the electrode detected by the sensor part.

In addition, another embodiment of the present invention provides an electrode supply method including: a sensing step of detecting a stacked shape of an electrode in an electrode magazine part in which a plurality of electrodes is stacked and accommodated; and a picking-up step configured to pick up the electrode in the electrode magazine part, in which the electrode supply method may further include a position control step of changing a position of the electrode in the electrode magazine part in accordance with the stacked shape of the electrode detected by the sensor part between the sensing step and the picking-up step.

In addition, still another embodiment of the present invention provides an electrode assembly manufacturing apparatus including: a stack table on which an electrode assembly including a first electrode, a separator, and a second electrode is placed; a first electrode supply part configured to supply the first electrode to the stack table; a second electrode supply part configured to supply the second electrode to the stack table; and a separator supply part configured to supply the separator to the stack table, in which at least one of the first electrode supply part and the second electrode supply part includes the electrode supply apparatus according to the above-mentioned embodiment.

Yet another embodiment of the present invention provides an electrode assembly manufacturing method including: supplying separators to a stack table and stacking the separators while folding the separators in a zigzag manner; and sequentially supplying first electrodes and second electrodes between the separators being folded and supplying and disposing alternately the first electrodes and the second electrodes between the separators being folded, in which the method according to the above-mentioned embodiment is performed when at least one of the first electrode and the second electrode is supplied.

### [Advantageous Effects]

The electrode supply apparatus and method according to the embodiment of the present invention may detect the stacked shape, such as the curled shape, of the electrode by means of the sensor part before the electrode is picked up in the electrode magazine part, and change the position of the electrode in the electrode magazine part in accordance with the stacked shape of the electrode, thereby accurately picking up the single electrode. Therefore, it is possible to prevent a defect such as a two-sheet defect, a pick-up defect, or a defect caused when the electrode is erroneously positioned on the stack table or the alignment table. Therefore, it is possible to improve the yield and operation rate of the electrode assembly manufacturing process.

### [Brief Description of Drawings]

FIG. 1 is a view illustrating a structure and operational principle of an electrode supply apparatus according to an embodiment of the present invention.
FIG. 2 is a view illustrating a position of a sensor part of the electrode supply apparatus according to the embodiment of the present invention.
FIG. 3 is a view illustrating a position of an electrode sensed by the electrode supply apparatus according to the embodiment of the present invention.
FIG. 4 is a view illustrating a structure of an electrode assembly manufacturing apparatus according to the embodiment of the present invention.
FIG. 5 is a cross-sectional view exemplarily illustrating an electrode assembly having a zigzag-stacked shape and manufactured by the manufacturing apparatus according to the embodiments of the present invention.

### [Explanation of Reference Numerals and Symbols]

10: Electrode magazine part
20: Magazine lift
40: Air blower
50: Electrode tab
60: Electrode
71: Electrode picking-up part
41: First sensor part
42: Third sensor part
43: Second sensor part
44: Fourth sensor part
11: First electrode
12: Second electrode
14: Separator
100: Electrode assembly manufacturing apparatus
120: Separator supply part
121: Guide part
122: Separator roll
110: Stack table
150: First electrode supply part
160: Second electrode supply part
151, 161: Suction head
153, 163: Electrode movement part
131, 141: Alignment table
A: Central portion of electrode
B: Edge portion of electrode

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein.

A size and thickness of each constituent element illustrated in the drawings are arbitrarily shown for convenience of description, but the present invention is not limited thereto.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term "part" means an interface that performs a particular function in an electrode assembly manufacturing apparatus.

In the present specification, when one component is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

In the following description of the present invention, the specific descriptions of well-known related technologies will be omitted when it is determined that the specific descriptions may unnecessarily obscure the subject matter of the present invention.

### <ELECTRODE SUPPLY APPARATUS AND METHOD>

An embodiment of the present invention provides an electrode supply apparatus including an electrode magazine part in which a plurality of electrodes is stacked and accommodated, a sensor part configured to detect a stacked shape of the electrodes in the electrode magazine part, an electrode picking-up part configured to pick up the electrode in the electrode magazine part, and a position controller configured to change a position of the electrode in the electrode magazine part in accordance with a stacked shape of the electrode detected by the sensor part.

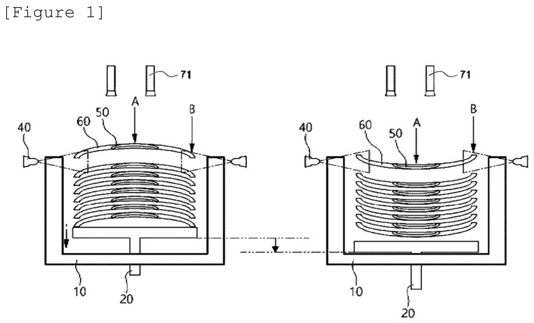

With reference to FIG. 1, an electrode supply apparatus according to an embodiment of the present invention includes an electrode magazine part 10, and an electrode picking-up part 71 configured to pick up an electrode in the electrode magazine part. A plurality of electrodes 60 is stacked and accommodated in the electrode magazine part 10. The electrode picking-up part 71 may pick up the electrode by vacuum suction. In this case, there may occur a two-sheet defect caused when because of the stacked shapes of the electrodes, an additional electrode is placed on the picked-up electrode, and the two electrodes are picked up together during a process of picking up the electrodes.

For example, the electrode supply apparatus may further include an air blower 40 configured to blow air toward the electrode picked up by the electrode picking-up part 71. The air blower may prevent an additional electrode from being placed on the picked-up electrode. Meanwhile, in case that the stacked electrodes 60 are curled, the air blown from the air blower 40 cannot be blown to an appropriate position between the picked-up electrode and the remaining electrodes, which makes it impossible to effectively prevent a two-sheet defect.

Therefore, in the present invention, in addition to sensor parts 41, 42, 43, and 44 configured to detect a stacked shape, such as a curled shape, of the electrode, a position controller is provided to change the position of the electrode in the electrode magazine part in accordance with the stacked shape of the electrode detected by the sensor part, such that it is possible to effectively prevent the above-mentioned two-sheet defect and prevent a pick-up defect and an error of an electrode position on a stack table or an alignment table that may be caused by the two-sheet defect.

According to the embodiment, the position controller is a magazine lift 20 provided at a lower end in the electrode magazine part and configured to receive information on the stacked shape of the electrode detected by the sensor part and adjust a height of the electrode. As illustrated in FIG. 1, the magazine lift 20 may increase or decrease the height of the electrode by vertically moving in accordance with the information on the stacked shape of the electrode detected by the sensor part.

Specifically, in case that the electrode supply apparatus further includes the air blower 40 configured to blow air toward the electrode picked up by the electrode picking-up part, the position controller may adjust the heights of the electrodes so that the air is blown to the portion between the picked-up electrode and the remaining electrode.

According to the embodiment, in case that a central portion of the electrode is higher in height than an edge portion of the electrode, the position controller increases the height of the electrode. In case that the central portion of the electrode is lower in height than the edge portion of the electrode, the position controller decreases the height of the electrode.

For example, as illustrated in the left view in FIG. 1, in case that a central portion A of the electrode is higher in height than an edge portion B of the electrode, the position controller increases the height of the electrode, and air is blown toward the edge portion of the electrode disposed at an uppermost side and disposed at a relatively low height, such that it is possible to effectively prevent the remaining electrode from being raised when one electrode disposed at the uppermost side is picked up. On the contrary, as illustrated in the right view in FIG. 1, in case that the central portion A of the electrode is lower in height than the edge portion B, the position controller decreases the heights of the electrodes, and the air is blown toward the edge portion of the electrode disposed at a relatively high height, such that it is possible to effectively prevent a two-sheet defect.

For example, the sensor part may be configured to detect a height of an upper surface of the electrode disposed at the uppermost side among the plurality of electrodes stacked in the electrode magazine part. As described above, in order to detect the height of the upper surface of the electrode disposed at the uppermost side, the sensor part may be provided above the electrodes accommodated in the electrode magazine part. For example, the sensor part may be installed on a magazine loader.

The number of sensor parts and the position of the sensor part may be designed as necessary. However, in order to detect a stacked shape such as a curled shape of the electrode, the sensor part may be configured to detect heights of at least two points on the upper surface of the electrode disposed at the uppermost side among the plurality of electrodes stacked in the electrode magazine part. As described above, the information on the stacked shape, such as the curled shape, of the electrode obtained by detecting heights of at least two points and relatively comparing these heights.

In case that the electrode has a rectangular shape, the sensor part may be configured to detect heights of at least two points in a major axis direction and heights of at least two points in a minor axis direction of the upper surface of the electrode disposed at the uppermost side among the plurality of electrodes stacked in the electrode magazine part. With the above-mentioned configuration, it is possible to identify whether the electrode is curved in the major axis direction or whether the electrode is curved in the minor axis direction.

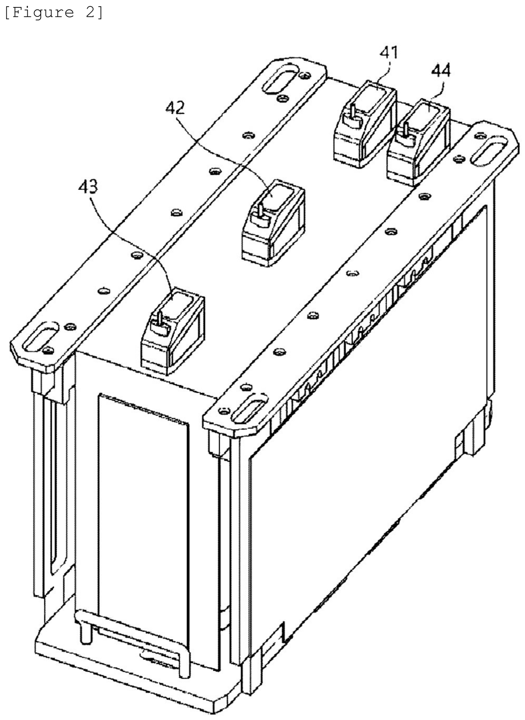

In a specific example, FIG. 2 illustrates positions of the sensor parts 41, 42, 43, and 44.

The sensor part may include at least two sensor parts selected from first and second sensor parts 41 and 43 configured to respectively detect heights of first and second edge portions of the upper surface of the electrode disposed at the uppermost side in the electrode magazine part, the first and second edge portions being positioned to be opposite to each other in the major axis direction, and a third sensor part 42 configured to detect a height of a central portion positioned between the first edge portion and the second edge portion. For example, in case that the sensor part includes the third sensor part 42 and one of the first and second sensor parts 41 and 43, it is possible to identify whether there is a difference in height between the edge portion and the central portion in the major axis direction of the electrode. Therefore, it is possible to identify whether the electrode is curled in the major axis direction. Particularly, the sensor part may include the first sensor part 41, the second sensor part 43, and the third sensor part 42.

The first to third sensor parts 41, 42, and 43 may be provided at the same position from any one end, based on the minor axis direction, of the upper surface of the electrode disposed at the uppermost side in the electrode magazine part. In this case, regardless of the curled shape of the electrode in the minor axis direction, it is possible to accurately detect the curled shape of the electrode in the major axis direction. For example, as illustrated in FIG. 2, the first to third sensor parts 41, 42, and 43 may be configured to detect the heights of the central portion positioned between third and fourth edge portions of the upper surface of the electrode disposed at the uppermost side in the electrode magazine part, the third and fourth edge portions being positioned to be opposite to each other in the minor axis direction.

Additionally, in addition to the first to third sensor parts, the sensor part may further include a fourth sensor part 44 configured to detect a height of any one of the third and fourth edge portions disposed at the same distance from at least one of the first to third sensor parts and an end, based on the major axis direction, of the upper surface of the electrode disposed at the uppermost side in the electrode magazine part, the third and fourth edge portions being positioned to be opposite to each other in the minor axis direction of the upper surface of the electrode disposed at the uppermost side in the electrode magazine part. FIG. 2 illustrates the structure in which the fourth sensor part 44 and the first sensor part 41 are disposed at the same distance from the end of the electrode based on the major axis direction. However, the fourth sensor part 44 and the second sensor part 43 or the third sensor part 42 may be disposed at the same distance from the end of the electrode based on the major axis direction. As necessary, the sensor part may further include a fifth sensor part (not illustrated) configured to detect a height of the other of the third and fourth edge portions positioned to be opposite to each other in the minor axis direction of the upper surface of the electrode disposed at the uppermost side.

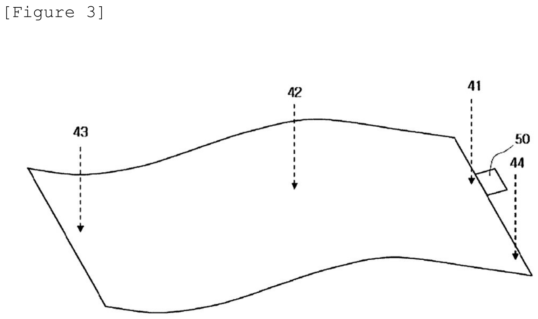

According to the embodiment, the first sensor part 41 and the fourth sensor part 44 are configured to detect the heights of the first and fourth edge portions of the upper surface of the electrode disposed at the uppermost side in the electrode magazine part, and the electrode may include an electrode tab 50 provided at an end adjacent to the first edge portion. Because the electrode may be curled at the edge portion of the electrode having the electrode tab, the first sensor part 41 and the fourth sensor part 44 may be provided, as described above, to more accurately detect the curled shape of the portion of the electrode adjacent to the electrode tab. FIG. 3 illustrates the positions on the electrode detected by the first to fourth sensor parts 41, 42, 43, and 44, as described above.

According to the embodiment, there is provided an electrode supply apparatus in which stacked shape of the electrode is the curled shape. The electrode supply apparatus may detect the stacked shape, such as the curled shape of the electrode, by means of the sensor part and change the position of the electrode in the electrode magazine part, such that the electrode supply apparatus may accurately pick up the single electrode and prevent a defect such as a two-sheet defect, a pick-up defect, or an electrode position error.

An electrode supply method according to an additional embodiment of the present invention may include a sensing step of detecting the stacked shape of the electrode in the electrode magazine part in which the plurality of electrodes is stacked and accommodated, and a picking-up step of picking up the electrode in the electrode magazine part. The electrode supply method may further include a position control step of changing the position of the electrode in the electrode magazine part in accordance with the stacked shape of the electrode detected by the sensor part between the sensing step and the picking-up step. The sensing of the stacked shape of the electrode and the adjustment of the electrode position according to the detected electrode stacked shape may reduce problems such as a two-sheet defect during the process of picking up the electrode.

According to the embodiment, the picking-up step may include an air blowing step of blowing air to the picked-up electrode. In the position control step, the height of the electrode may be adjusted so that air is blown to the portion between the picked-up electrode and the remaining electrode in the air blowing step.

Specifically, in case that the air is blown to the picked-up electrode in the picking-up step, the height of the electrode is adjusted in the position control step so that the air is blown to the portion between the electrode, which is picked up in the air blowing step, and the remaining electrode, which may effectively prevent a two-sheet defect. For example, in the position control step, the height of the electrode is increased in case that the central portion of the electrode is higher in height than the edge portion, and the height of the electrode is decreased in case that the central portion of the electrode is lower in height than the edge portion. This process may be described with reference to the above-mentioned description described with reference to FIG. 1.

The sensing step may include detecting heights of at least two points on the upper surface of the electrode disposed at the uppermost side among the plurality of electrodes stacked in the electrode magazine part, such that it is possible to accurately detect the curled shape by comparing the relative heights of the positions on the electrode. The process of detecting the heights of the positions on the electrode will be described with reference to the description described with reference to FIGS. 2 and 3.

### <ELECTRODE ASSEMBLY MANUFACTURING APPARATUS AND METHOD>

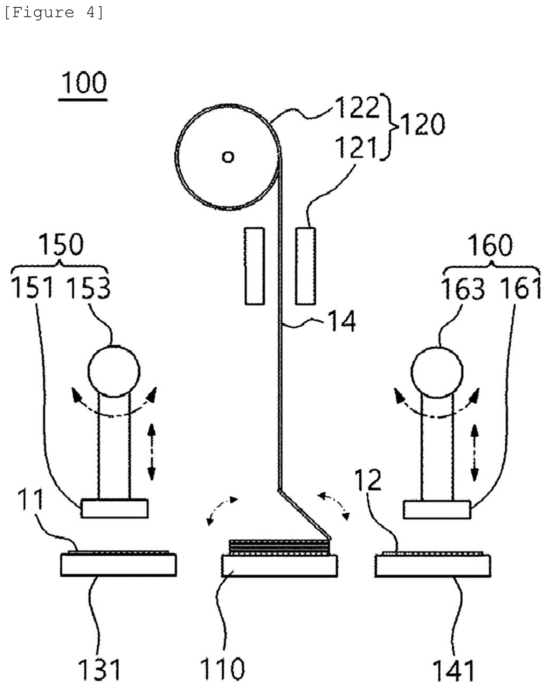

As illustrated in FIG. 4, an electrode assembly manufacturing apparatus according to the embodiment of the present invention may include a stack table 110 on which an electrode assembly including a first electrode, a separator, and a second electrode is placed, a first electrode supply part configured to supply the first electrode to the stack table, a second electrode supply part configured to supply the second electrode to the stack table, and a separator supply part 120 configured to supply the separator to the stack table. At least one of the first electrode supply part and the second electrode supply part may include the electrode supply apparatus according to the above-mentioned embodiments.

For example, the electrode picking-up part 71 of the electrode supply apparatus may supply the electrode, which is transferred from the electrode magazine part 10, directly onto the stack table 110.

According to another example, the electrode supply apparatus may further include alignment tables 131 and 141 and electrode supply parts 150 and 160 configured to dispose the electrodes transferred by the electrode picking-up part 71. The electrode supply parts 150 and 160 may include suction heads 151 and 161 configured to suck the electrodes 11 and 12 by vacuum suction, and electrode movement parts 153 and 163 configured to move the electrodes 11 and 12 to the stack table 110.

For example, the stack table 110 may rotate in the directions indicated by the arrows in FIG. 4. In this case, the electrode supply parts 150 and 160 may supply the first electrode 11 and the second electrode 12 to the stack table 110 while rotating in the arrow directions.

The electrode assembly manufacturing apparatus 100 may include a heater (not illustrated) configured to heat the electrodes 11 and 12 placed on the alignment tables 131 and 141. The heater may heat the first electrode and/or the second electrode by raising temperatures of the alignment tables 131 and 141 or raising a temperature of a process ambience.

An electrode assembly manufacturing method according to the embodiment of the present invention may include a step of supplying the separators to the stack table and stacking the separators while folding the separators in a zigzag manner, and a step of sequentially supplying the first electrodes and the second electrodes between the separators being folded and supplying and disposing the first electrodes and the second electrodes alternately between the separators being folded. The electrode supply method according to the above-mentioned embodiment may be performed to supply at least one of the first electrode and the second electrode.

The electrode assembly manufacturing apparatus and method according to the embodiment of the present invention may include the components typically used in the art in addition to the configuration in which the electrode supply apparatus or method according to the present invention is included.

An electrode assembly manufactured by the electrode assembly manufacturing apparatus and method according to the embodiments of the present invention may include a first electrode, a separator, and a second electrode and have a structure in which the first electrode, the separator, and the second electrode are stacked in a zigzag manner.

In the present specification, a process of stacking the first electrodes 11 and the second electrodes 12 by disposing the first electrodes 11 and the second electrodes 12 alternately between the separators 14 folded in a zigzag shape is called zigzag stacking. Specifically, the separators are stacked in a zigzag manner while being folded in a shape in which the separators are alternately disposed at a left side of the stacking axis and a right side of the stacking axis based on the stacking axis. Further, the first and second electrodes are alternately disposed and stacked between the stacked separators. In this case, the stacking axis means an axis parallel to a direction in which the first electrode, the separator, and the second electrode are stacked. The stacking axis means an imaginary axis passing through a center of the stack in which the electrodes and the separator are stacked.

The configuration in which the first electrodes and the second electrodes are disposed alternately between the separators means that the separators are stacked in the direction of the stacking axis while overlapping one another in a zigzag manner, and the first electrodes and the second electrodes are alternately stacked one by one in spaces (between the separators) defined when the separators overlap one another.

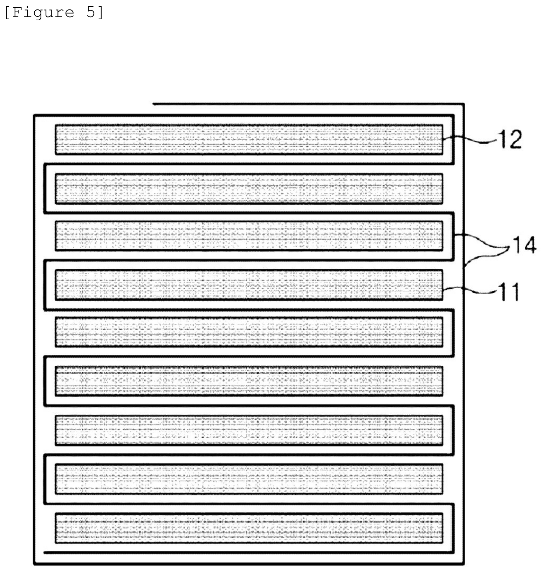

The electrode assembly stacked in a zigzag shape according to FIG. 5 is a power generation element that may be charged or discharged. The electrode assembly may be provided in the form in which the first electrode 11, the separator 14, and the second electrode 12 are alternately stacked and coupled. In this case, the electrode assembly is provided in the form in which the separators 14 are folded in a zigzag manner, and the first electrodes 11 and the second electrodes 12 are alternately disposed between the folded separators 14. The first electrode is a positive electrode, and the second electrode is a negative electrode. Alternatively, the first electrode is a negative electrode, and the second electrode is a positive electrode.

The negative electrode is manufactured by applying negative electrode slurry including a negative electrode active material onto at least one surface of a negative electrode current collector and drying the negative electrode slurry. As necessary, the negative electrode slurry may further include additional components such as a conductive material, a binder, and a solvent. The positive electrode is manufactured by applying positive electrode slurry including a positive electrode active material onto at least one surface of a positive electrode current collector and drying the positive electrode slurry. As necessary, the positive electrode slurry may further include additional components such as a conductive material, a binder, and a solvent. The separator may include a porous polymer substrate and an organic/inorganic composite porous coating layer formed on at least one side surface of the polymer substrate. The organic/inorganic composite porous coating layer may include particulate binder resins and inorganic particles. The negative electrode active material, the positive electrode active material, the additional components, the type of separator, and the method of manufacturing the positive and negative electrodes may be used without limitation as long as the above-mentioned components are publicly known in the art within the range to which the above-mentioned description is applied.

While the embodiments of the present invention have been described above, the scope of the present invention is not limited to, and it will be obvious to those skilled in the art to which the present invention pertains that various modifications and alterations may be made without departing from the technical spirit of the present invention.

## Claims

1. An electrode supply apparatus comprising:
an electrode magazine part in which a plurality of electrodes is stacked and accommodated;
a sensor part configured to detect a stacked shape of the electrode in the electrode magazine part;
an electrode picking-up part configured to pick up the electrode in the electrode magazine part; and
a position controller configured to change a position of the electrode in the electrode magazine part in accordance with the stacked shape of the electrode detected by the sensor part.

2. The electrode supply apparatus of claim 1, wherein the position controller is a magazine lift provided at a lower end in the electrode magazine part and configured to receive information on the stacked shape of the electrode detected by the sensor part and adjust a height of the electrode.

3. The electrode supply apparatus of claim 1, wherein the electrode supply apparatus further comprises an air blower configured to blow air to the electrode picked up by the electrode picking-up part, and the position controller adjusts a height of the electrode so that the air is blown to a portion between the picked-up electrode and the remaining electrode.

4. The electrode supply apparatus of claim 1, wherein the position controller increases a height of the electrode when a central portion of the electrode is higher in height than an edge portion of the electrode, and the position controller decreases the height of the electrode when the central portion of the electrode is lower in height than the edge portion.

5. The electrode supply apparatus of claim 1, wherein the sensor part is configured to detect a height of an upper surface of the electrode disposed at an uppermost side among the plurality of electrodes stacked in the electrode magazine part.

6. The electrode supply apparatus of claim 1, wherein the sensor part is configured to detect heights of at least two points on an upper surface of the electrode disposed at an uppermost side among the plurality of electrodes stacked in the electrode magazine part.

7. The electrode supply apparatus of claim 1, wherein the sensor part is configured to detect heights of at least two points in a major axis direction and heights of at least two points in a minor axis direction of an upper surface of the electrode disposed at an uppermost side among the plurality of electrodes stacked in the electrode magazine part.

8. The electrode supply apparatus of claim 1, wherein the sensor part comprises at least two sensor parts among first and second sensor parts configured to respectively detect heights of first and second edge portions positioned to be opposite to each other in a major axis direction of an upper surface of the electrode disposed at an uppermost side in the electrode magazine part, and a third sensor part configured to detect a height of a central portion positioned between the first edge portion and the second edge portion.

9. The electrode supply apparatus of claim 8, wherein the first to third sensor parts are configured to detect a height of a central portion positioned between third and fourth edge portions positioned to be opposite to each other in a minor axis direction of the upper surface of the electrode disposed at the uppermost side in the electrode magazine part.

10. The electrode supply apparatus of claim 8, further comprising:
a fourth sensor part configured to detect a height of any one of third and fourth edge portions disposed at the same distance from at least one of the first to third sensor parts and an end, based on the major axis direction, of the upper surface of the electrode disposed at the uppermost side in the electrode magazine part, the third and fourth edge portions being positioned to be opposite to each other in a minor axis direction of the upper surface of the electrode disposed at the uppermost side in the electrode magazine part.

11. The electrode supply apparatus of claim 10, wherein the first sensor part and the fourth sensor part are configured to respectively detect the heights of the first and fourth edge portions of the upper surface of the electrode disposed at the uppermost side in the electrode magazine part, and
wherein the electrode comprises an electrode tab provided at an end adjacent to the first edge portion.

12. The electrode supply apparatus of claim 1, wherein the stacked shape of the electrode is a curled shape.

13. An electrode supply method comprising:
a sensing step of detecting a stacked shape of an electrode in an electrode magazine part in which a plurality of electrodes is stacked and accommodated; and
a picking-up step configured to pick up the electrode in the electrode magazine part,
wherein the electrode supply method further comprises a position control step of changing a position of the electrode in the electrode magazine part in accordance with the stacked shape of the electrode detected by a sensor part between the sensing step and the picking-up step.

14. The electrode supply method of claim 13, wherein the picking-up step comprises blowing air to the picked-up electrode, and
wherein the position control step comprises adjusting a height of the electrode so that air is blown to a portion between the picked-up electrode and the remaining electrode in the air blowing step.

15. The electrode supply method of claim 13, wherein the position control step comprises:
increasing the height of the electrode when a central portion of the electrode is higher in height than an edge portion of the electrode; and
decreasing the height of the electrode when the central portion of the electrode is lower in height than the edge portion.

16. The electrode supply method of claim 13, wherein the sensing step comprises detecting heights of at least two points on an upper surface of the electrode disposed at an uppermost side among the plurality of electrodes stacked in the electrode magazine part.

17. An electrode assembly manufacturing apparatus comprising:
a stack table on which an electrode assembly comprising a first electrode, a separator, and a second electrode is placed;
a first electrode supply part configured to supply the first electrode to the stack table;
a second electrode supply part configured to supply the second electrode to the stack table; and
a separator supply part configured to supply the separator to the stack table,
wherein at least one of the first electrode supply part and the second electrode supply part comprises the electrode supply apparatus according to any one of claims 1 to 12.

18. An electrode assembly manufacturing method comprising:
supplying separators to a stack table and stacking the separators while folding the separators in a zigzag manner; and
sequentially supplying first electrodes and second electrodes between the separators being folded and supplying and disposing alternately the first electrodes and the second electrodes between the separators being folded,
wherein the method according to any one of claims 13 to 16 is performed when at least one of the first electrode and the second electrode is supplied.
